Europäisches Patentamt

European Patent Office

Office européen des brevets

(11) Veröffentlichungsnummer: **0 111 275**
**B1**

(12) **EUROPÄISCHE PATENTSCHRIFT**

(45) Veröffentlichungstag der Patentschrift:
05.07.89

(51) Int. Cl.⁴: **B 04 C 5/18**

(21) Anmeldenummer: 83112143.9

(22) Anmeldetag: 02.12.83

(54) Vorrichtung zur Feinstaubabscheidung bei einem Wirbelschichtreaktor.

(30) Priorität: 03.12.82 DE 3244769

(43) Veröffentlichungstag der Anmeldung:
20.06.84 Patentblatt 84/25

(45) Bekanntmachung des Hinweises auf die Patenterteilung:
05.07.89 Patentblatt 89/27

(84) Benannte Vertragsstaaten:
BE CH DE FR GB LI

(56) Entgegenhaltungen:
DE-A- 1 442 501
DE-C- 973 927
FR-A- 1 046 485
FR-A- 1 292 307
FR-A- 1 529 336
FR-A- 2 403 378
FR-E- 68 617
GB-A- 700 511
GB-A- 769 750
GB-A- 1 291 343
US-A- 3 139 726
US-A- 4 251 484
US-A- 4 279 622

CHEMICAL ABSTRACTS, Band 93, Nr. 6, August 1980,
Seite 143, Zusammenfassung Nr. 49152k, Columbus,

(73) Patentinhaber: Kernforschungsanlage Jülich
Gesellschaft mit beschränkter Haftung, Postfach 1913,
D-5170 Jülich 1 (DE)

(72) Erfinder: Wolf, Josef Dr., Römerstrasse 25, D-5170 Jülich
(DE)

(56) Entgegenhaltungen: (Fortsetzung)
Ohio, US; & PL - A - 104 586 (ZAKLADY AZOTOWE
"KEDZIERZYN") 31.01.1980
J.H.Perry "Chemical Engineer's Handbook", 4.Aufl.,
McGraw-Hill 1963, 20-48

## Beschreibung

Die Erfindung bezieht sich auf eine Vorrichtung zur Feinstaubabscheidung bei einem Wirbelschichtreaktor mit einem Zyklon mit einem zum unteren Bereich der Wirbelschicht reichenden Staubförderrohr am Feststoffauslaß des Zyklons.

Bei Prozessen in der Wirbelschicht mit sich ändernder Teilchengröße, wie insbesondere bei der Wirbelschichtverbrennung, etwa von Graphit, wird mit dem Abgasstrom Feingut ausgetragen, das abgetrennt und rückgeführt oder weiterbefördert (z.B. eingebunkert) werden muß. Dabei treten Schwierigkeiten auf, wenn der Feinstaub schlechte Fließeigenschaften besitzt.

So ist zwar grundsätzlich die Abscheidung mitgerissener Staubteilchen im oberen Bereich von Wirbelschichtreaktoren oberhalb der Wirbelschicht mit Hilfe von Zyklonen bekannt, deren (unterer) Staubauslaß durch ein in den unteren Bereich der Wirbelschicht führendes Tauchrohr (Staubförderrohr) verlängert wird (J.H. Perry «Chemical Engineer's Handbook», 4. Aufl. McGraw-Hill 1963, 20–48f.), wobei der Zyklonboden abgeschlossen oder durch ein Staubförderrohr von ausreichender Länge für eine genügende Förderwirkung verlängert wird, jedoch konnten bislang Abtrennung und Rückführung schlecht fließender Stäube wie des Feinstaubes einer Wirbelschichtverbrennung von Graphit auf diese Weise nicht erreicht werden.

Vielmehr wurden zum einen externe Abscheidungssysteme verwendet, bei denen der Staub entweder mit Hilfe einer Schieberschleuse oder eines nachgeschalteten Injektionssystems rezykliert wird. Diese Systeme haben den Nachteil eines hohen Aufwandes an mechanisch bewegten Teilen, der Abkühlung des Materials vor dem Wiedereintritt in das Wirbelbett und vor allem der Fließ- und Verstopfungsprobleme im Bunker und Fördersystem.

Zum anderen wurden gegebenenfalls in den Wirbelschichtreaktoren einbezogene Zyklone mit einer Venturi-Düse am Staubauslaß und Gasinjektor am Eingang der Venturi-Düse vorgesehen (z.B. GB-PS 1 291 343), mit denen der abgeschiedene Feinstaub unmittelbar auf die Oberfläche der Wirbelschicht geblasen wird. Bei diesem Konzept ist die Rückmischung des Feinstaubs in die Wirbelschicht und die Temperaturverteilung im Reaktor je nach Fördergas am Staubauslaß des Zyklons unbefriedigend, wobei insbesondere bei Graphit-Verbrennungen durch lokale Anreicherung von Feinstaub in Bereichen hoher Temperatur und erhöhter Sauerstoffkonzentration heftige Temperaturexkursionen auftreten können.

Ziel der Erfindung ist es, hier Abhilfe zu schaffen mit Hilfe eines Systems, das ohne großen technischen Aufwand eine überraschend störungsfreie Feinstaubrezyklierung schlecht fließender Stäube ermöglicht und ohne weiteres in den Wirbelschichtreaktor mit einbezogen werden kann.

Die zu diesem Zweck entwickelte Vorrichtung der eingangs genannten Art ist gekennzeichnet durch eine Venturi-Düse mit Gasinjektor am Eingang des Venturi-Rohres zwischen Zyklon und Staubförderrohr.

Das Injektorsystem dient hierbei einerseits als Schleuse zwischen dem Druckniveau des Zyklons und dem Druckniveau des Förderrohrs, und andererseits fördert der Treibstrahl den schlecht fließenden Feinstaub durch das an die Venturi-Düse anschließende Förderrohr. Dabei kann die Wirkung des Zyklons durch Ein- oder Ausschalten des Treibstrahls ein- bzw. ausgeschaltet werden.

Mit der erfindungsgemäßen Kombination aus Injektorsystem (Venturi-Düse mit Gasinjektor) und daran anschließendem zum unteren Bereich der Wirbelschicht führenden Tauchrohr kann eine glatte Vermischung des abgeschiedenen Feinstaubes in das Wirbelbett erreicht werden, wobei keinerlei Begrenzungen hinsichtlich der Bauhöhe des Wirbelschichtreaktors und der Fließfähigkeit der Stäube bestehen. Insbesondere ist auf diese Weise eine vollständige Verbrennung auch schlecht brennbarer Staubteilchen innerhalb der Reaktionszone möglich, und die Temperaturverteilung im Wirbelschichtreaktor wird durch die Feinstaubrückführung in das Bett nicht grundlegend gestört oder verändert, so daß gegebenenfalls auch eine intermittierende Rückführung möglich ist.

Insbesondere für die Förderung bzw. den Austrag extrem schlecht fließender Staube (wie etwa Mischungen aus Uranoxid und Graphit) ist vorzugsweise ein Ringspalt am Eingang des Auslaßkonus des Zyklons vorgesehen, durch den Zusatzgas längs der Konuswand zugeführt werden kann, das einen Gasstrom längs des Konus bildet und so ein Anbacken von Staub an der Wand verhindert.

Aufbau und Arbeitsweise der erfindungsgemäßen Vorrichtung werden anhand der nachfolgend unter Bezugnahme auf die angefügten Zeichnungen beschriebenen Anwendungen in einem Wirbelschichtreaktor zur Graphitverbrennung besser verständlich werden; es zeigen:

Figur 1 ein Schema für einen Wirbelschichtreaktor mit einbezogenem Zyklon gemäß der Erfindung;

Figur 2 den in Figur 1 ersichtlichen Zyklon in vergrößertem Maßstab und

Figur 3 einen Zyklon mit Ringspalt am Auslaßkonus.

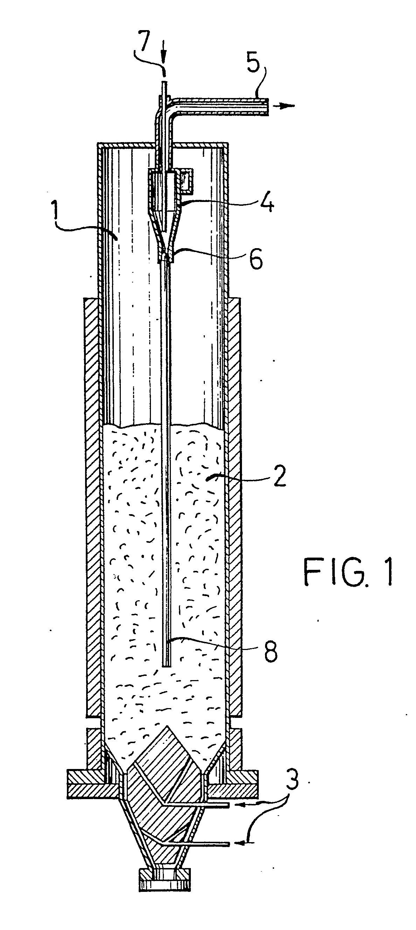

Bei dem in Figur 1 gezeigten Wirbelschichtreaktor 1 mit Wirbelschicht 2, die durch ein Fluidisierungsmittel 3 im Schwebezustand gehalten wird, gelangt das abgehende Gas zusammen mit mitgeführtem Feinkorn am oberen Ende des Wirbelschichtreaktors tangential in den Zyklon 4, der für eine weitgehende Abscheidung des Kronmaterials sorgt. Das vom Korn befreite Gas verläßt über 5 die Anlage, während das abgeschiedene Feinkorn über das Venturi-Rohr 6 angetrieben vom Injektor 7 in die Förderleitung 8 gelangt und so in die Wirbelschicht zurückkehrt.

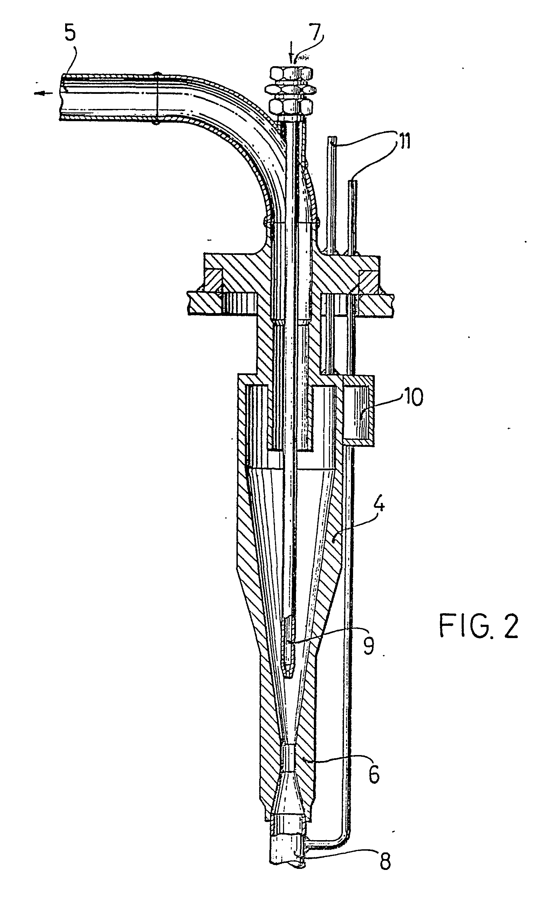

In Figur 2 ist der Zyklon 4 mit anschließendem Venturi-Rohr und Förderleitung 8 mehr im einzelnen dargestellt: wie man sieht, geht der Zyklon am unteren Ende absatzlos in das Venturi-Rohr 6 über, an dessen Eingang die Düse 9 des Injektors 7 angeordnet ist, mit deren Hilfe das abgeschiedene Feinkorn in die Förderleitung 8 gelangt. Das über die Eintrittsöffnung 10 in den Zyklon gelangende Abgas gelangt gereinigt über 5 aus der Anlage. Über eine Differenzdruckmessung 11 kann schließlich die Arbeitsweise der Anordnung kontrolliert werden.

Eine im Labormaßstab erprobte Ausführungsform der Erfindung in der durch Figur 1 und 2 schematisch veranschlichten Art hatte folgende Abmessungen: der Zyklon mit einem Innendurchmesser von 65 mm wurde durch ein Venturi-Rohr mit einem Durchmesser von 8 mm an der engsten Stelle verlängert, an das sich ein Förderrohr mit einem Durchmesser von 20 mm anschloß. Die Düsenöffnung hatte einen Durchmesser von 1,5 mm und war in einem Abstand von 25 mm vom engsten Querschnitt des Venturi-Rohres entfernt angeordnet.

Mit dieser Laborausführung wurde die aus dem Ofen ausgetragene Feinstaubmenge mit Hilfe der Erfindung von etwa 5 kg/h auf weniger als 200 g/h gesenkt, obwohl die Gasgeschwindigkeit im Wirbelbett durch das eingeblasene Treibgas erhöht wurde, und zwar betrug die Abgasmenge insgesamt etwa 20 Nm³/h; die Gasmenge für den Treibstrahl lag bei 1,2 Nm³/h. Bei 11 wurde ein Differenzdruck von 20 mbar gemessen.

Bei Verwendung eines mehrstufigen Zyklonsystems könnte hier noch eine Verbesserung erreicht werden:.

Die Gaszufuhr zum Injektor 7 wird zweckmäßigerweise für eine entsprechende Temperierung durch den Ofen selbst geleitet.

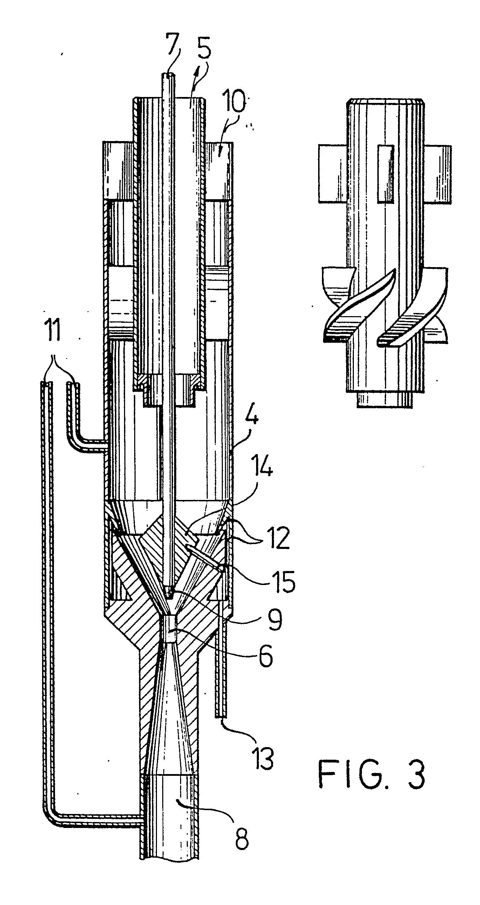

Beim Austrag extrem schlecht fließender Stäube aus dem Zyklon kann es zweckmäßig sein, wenn zusätzlich durch Einführung von Gas über einen entsprechenden Ringspalt dafür gesorgt wird, daß die Konusfläche am Zyklonausgang ständigt von einem Gasstrom überstrichen wird, der das Anhaften von Staubpartikeln an einer solchen, eine gewisse Horizontalkomponente aufweisenden Wandfläche verhindert. Figur 3 zeigt eine solche Ringspaltanordnung am Ende eines Axialzyklons.

Die der Anordnung gemäß Figur 3 entsprechenden Teile tragen gleiche Bezugszeichen. Zusätzlich ist jedoch ein zur Konuswand hin gerichteter Ringspalt 12 am Eingang des Austragskonus' des Zyklons vorgesehen, der über einen Anschluß 13 mit Zusatzgas versorgt wird. Ein am Ende der Düse 9 vorgesehener Leitkonus 14 sorgt für einen glatten Einlauf des Staubkorns in den Austragskonus und ist in seiner Gestalt dem Strömungsverhalten des Zyklons in diesem Austragbereich angepaßt. Zentrierstifte 15 sorgen für eine exakte Ausrichtung der Düse 9.

Bei der gezeigten Anordnung hatte der Zyklon einen Innendurchmesser von 80 mm. Der Durchmesser der engsten Stelle 6 des Venturi-Rohres hatte einen Durchmesser von 8 mm und die Düse 9 einen solchen von 2,2 mm. Der Durchmesser des Tauch- bzw. Förderrohres 8 lag bei 32 mm und derjenige der Abgasleitung 5 bei 45 mm. Die Abgasmenge betrug insgesamt 40 Nm³/h. Durch die Treibgasleitung 7 wurden 2,2 Nm³/h zugeführt. Der Ringspalt hatte eine lichte Weite von 0,15 mm und wurde mit 1 Nm³/h Zusatzgas versorgt.

Durch das erfindungsgemäße System mit Venturi-Rohr am Zyklonausgang mit vorgeschalteter Injektordüse 9 wird ein Wiedereintrag auch schlecht fließenden Staubes in eine Wirbelschicht unter Differenzdrucken von bis zu 1500 bis 2000 mbar erreicht. Als Treibgas reichen Mengen ab etwa 5%, bezogen auf den Gasdurchsatz des Zyklons.

Durch den Ringspalt werden zusätzlich Gasmengen ab etwa 2,5%, bezogen auf den Gasdurchsatz des Zyklons, zugeführt.

Als Vorteile des Systems ergibt sich der Fortfall mechanisch bewegter Bauteile sowie eine Abkühlung des Feinstaubes und jeder Verstopfungsgefahr in der Förderleitung. Ferner kann die außerhalb des Wirbelreaktors zu handhabende Staubmenge stark vermindert werden.

**Patentansprüche**

1. Vorrichtung zur Feinstaubabscheidung bei einem Wirbelschichtreaktor (1) mit einem Zyklon (4) mit einem zum unteren Bereich der Wirbelschicht reichenden Staubförderrohr (8) am Feststoffauslaß des Zyklons, gekennzeichnet durch eine Venturi-Düse (6) mit Gasinjektor (7) am Eingang des Venturi-Rohres zwischen Zyklon (4) und Staubförderrohr (8).

2. Vorrichtung nach Anspruch 1, gekennzeichnet durch einen am Eingang des Auslaßkonus des Zyklons (4) vorgesehenen Ringspalt (12) in Konusrichtung mit einer Zusatzgasversorgung (13).

3. Vorrichtung nach Anspruch 1 oder 2, dadurch gekennzeichnet, daß der Zyklon (4) in den Wirbelschichtreaktor (1) einbezogen ist.

4. Vorrichtung nach einem der vorangehenden Ansprüche, gekennzeichnet durch eine Heizschleife in der Zuleitung zum Gasinjektor (7).

5. Vorrichtung nach einem der vorangehenden Ansprüche, gekennzeichnet durch eine Hintereinanderschaltung von zwei oder mehr Zyklonen.

**Claims**

1. Device for separating fine powder at a fluidized-bed reactor (1) with a cyclone (4), with a powder transfer tube (8) on the solids outlet of the cyclone extending to the lower region of the fluidized-bed, chartacterized by a Venturi nozzle (6) with gas injector (7) at the inlet of the Venturi tube between the cyclone (4) and the powder transfer tube (8).

2. Device according to Claim 1, characterized by an annular gap (12) provided at the inlet of the outlet cone of the cyclone (4) in the direction of the cone with an auxiliary gas supply (13).

3. Device according to Claim 1 or 2, characterized in that the cyclone (4) is incorporated in the fluidized-bed reactor (1).

4. Device according to one of the preceding Claims, characterized by a heating loop in the supply line to the gas injector (7).

5. Device according to one of the preceding Claims, characterized by a series connection of two or more cyclones.

## Revendications

1. Dispositif de séparation de la poussière fine dans un réacteur à lit fluidisé (1) comprenant un cyclone (4) ayant, à la sortie de matière solide du cyclone, un tube de transport de la poussière (8) allant jusqu'à la partie inférieure du lit fluidisé, caractérisé par une buse Venturi (6), avec un injecteur de gaz (7) à l'entrée du tube Venturi entre le cyclone (4) et le tube de transport de la poussière (8).

2. Dispositif suivant la revendication 1, caractérisé par une fente annulaire (12) qui est prévue à l'entrée du cône de sortie du cyclone (4) avec une alimentation supplémentaire de gaz (13) dans la direction du cône.

3. Dispositif suivant la revendication 1 ou 2, caractérisée en ce que le cyclone (4) est inclus dans le réacteur à lit fluidisé (1).

4. Dispositif suivant l'une des revendications précédentes, caractérisé par une boucle de chauffage dans le conduit d'amenée allant à l'injecteur de gaz (7).

5. Dispositif suivant l'une des revendications précédentes, caractérisé par un montage en série de deux cyclones ou de plusieurs cyclones.

FIG. 1

FIG. 2

FIG. 3